(19) Europäisches Patentamt
European Patent Office
Office européen des brevets

(11) **EP 3 357 804 A1**

(12) **EUROPEAN PATENT APPLICATION**
published in accordance with Art. 153(4) EPC

(43) Date of publication:
**08.08.2018  Bulletin 2018/32**

(21) Application number: **16851958.5**

(22) Date of filing: **29.03.2016**

(51) Int Cl.:
**B62K 5/027** (2013.01)      **B62K 5/01** (2013.01)
**B62M 23/00** (2006.01)      **B62K 11/00** (2006.01)
**B60L 15/20** (2006.01)

(86) International application number:
**PCT/KR2016/003217**

(87) International publication number:
**WO 2017/057810 (06.04.2017 Gazette 2017/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:  **30.09.2015  KR 20150137225**

(71) Applicants:
• **Kwon, Yong Bum**
  **Daegu 42826 (KR)**
• **Kwon, Seong Eun**
  **Daegu 42826 (KR)**

(72) Inventors:
• **Kwon, Yong Bum**
  **Daegu 42826 (KR)**
• **Kwon, Seong Eun**
  **Daegu 42826 (KR)**

(74) Representative: **Rau, Schneck & Hübner**
**Patentanwälte Rechtsanwälte PartGmbB**
**Königstraße 2**
**90402 Nürnberg (DE)**

(54) **DRIVE CONTROL BY SELF-LOAD OF TRANSPORT MEANS HAVING TWO OR MORE MOTOR-DRIVEN WHEELS**

(57)    The present invention relates to controlling a speed of each wheel required for riding in a curved section or an unexpected situation for a motorcycle which is realized in "Korean Patent Number 10-0873537 titled a two-wheel moving body and a motorcycle having the same" and to which an electric motor is applied, and for a motorcycle or a transport means which is motor-driven, wherein two or more independent drive motors are applied to a front wheel and/or a rear wheel thereof. When a motor-driven transport means having three or more wheels runs in a curved section, since a rotational speed of a wheel disposed on an outer side from a center of a curve radius must be higher than a rotational speed of a wheel disposed on an inner side, riding stability can be seriously affected if the motors are not individually controlled to change the speeds. Accordingly, precise control for each motor is required. The present invention resolves the problem by using a physical phenomenon which occurs in the transport means when riding in a curved section and unique properties of a BLDC motor without using an additional controller. The motorcycle and the transport means mentioned above use the motor of an independent drive form for each wheel to consume less energy than when maneuvering the transport means with one motor and improve maneuverability and energy efficiency.

[FIG. 3]

## Description

### TECHNICAL FIELD

In relation to a means of transportation realized through the invention of "Korean Patent Number 10-0873537 titled a two-wheel moving body and a motorcycle having the same" and a means of transportation (a motorcycle, an automobile etc.) which is driven by electricity and has two or more independent drive wheels at a front wheel and/or a rear wheel, the present invention relates to a method for automatically controlling differences in speed of each wheel, which are caused due to distances between each wheel and the center of a radius of gyration when a means of transportation runs in a curved section, without a separate control device by means of unique features of a motor and physical phenomena that take place when the means of transportation runs in a curved section.

Additionally, the present invention relates to a method for improving mobility and energy efficiency by using a plurality of motors rather than one motor when the means of transportation needs great power to be started and to climb up an incline.

### RELATED ART

In general, means of transportation such as an electric automobile, an electric motorcycle etc. attract public attention as an environmentally friendly means of transportation, thereby helping prevent air pollution because such means of transportation do not use fossil fuels.

However, the question is that how far these electric automobiles and electric motorcycles that are driven by electricity travel once the batteries are charged. The range of electric vehicles is closely connected to battery capacity together with the efficiency of the electricity-driven system.

In general, when means of transportation run in a curved section, speed and loads of each wheel differs depending on a radius of gyration and centrifugal force. To solve this problem, means of transportation driven by the engine use the differential gear. However, if means of transportation driven by electricity use the differential gear, energy efficiency may not be achieved. Further, in the case of a motorcycle, there is no enough room to apply the differential gear.

A plurality of small and medium-sized motors may be used as a means to solve the above-described problems, thereby helping improve energy efficiency.

### DETAILED DESCRIPTION OF THE INVENTION

### TECHNICAL PROBLEMS

The problem is that when an electric motor is applied to drive a motorcycle realized through the invention of "Korean Patent Number 10-0873537 titled a two-wheel moving body and a motorcycle having the same" and a means of transportation (a motorcycle, an automobile etc.) which is driven by two or more independent drive wheels at a front wheel and/or a rear wheel, in the situation where the motorcycle and the means of transportation need great power to be started and to climb up an incline, a large capacity motor is needed to drive the motorcycle and the means of transportation in a normal way. In this case, although a large capacity motor is used to drive the motorcycle and the means of transportation, a moving apparatus with a small body such as a motorcycle has the problem of space limitations.

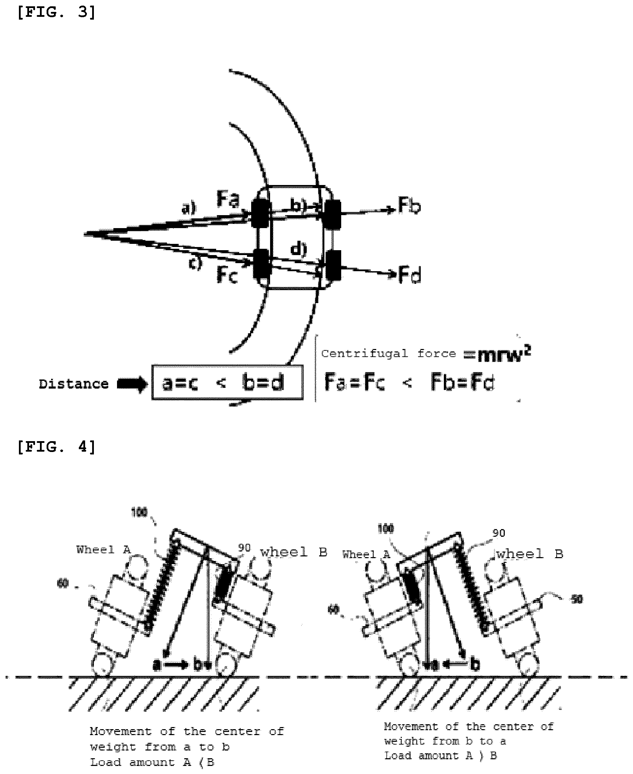

Additionally, in general, a rotational speed of a wheel disposed on an inner side and a rotational speed of a wheel disposed on an outer side from the center of a radius of gyration, as illustrated in FIG. 3, are different depending on differences in a radius of gyration when a means of transportation runs in a curved section. Accordingly, this causes differences in centrifugal force and in loads of each wheel. In particular, controlling the speed of the wheel is important in ensuring driving stability. To this end, while means of transportation such as conventional automobiles use differential gears, means of transportation, which are driven by electricity and have independent drive motors, must link each of the drive motors to control (synchronize) them.

Accordingly, in terms of means of transportation driven by electricity, motor control technologies are necessary to solve the above-described problems. Additionally, the durability and stability of the control device should be ensured considering that in general, the condition of a means of transportation is heavily dependent on the driver's habits.

### TECHNICAL SOLUTIONS

A means of transportation in relation to the present invention is configured to be a motorcycle realized through the invention of "Korean Patent Number 10-0873537 titled a two-wheel moving body and a motorcycle having the same" and a means of transportation (a motorcycle, an automobile etc.) which is driven by electricity and has two or more independent drive wheels at a front wheel and/or a rear wheel, and is configured to be equipped with independently driven electric motors at each wheel or two or more independently driven electric motors.

In the event that large capacity motors necessary for means of transportation may not be used due to the problems of space limitations etc. with the above-described means of transportation, a plurality of small and medium capacity motors rather than one large capacity motor are used for each drive wheel in an independent drive form as a means to solve the problem of space limitations, thereby improving mobility and energy efficiency.

In this case, the drive wheels are driven by means of motors equipped outside or inside each of the drive wheels. In particular, in the case of a wheel with a built-in motor - a wheel into which a motor is built, a loss of energy in the process of transmitting power may be avoidable by means of a simplified power transmission system.

Further, as illustrated in FIG. 3, when the above-described means of transportation runs in a curved section, a rotational speed of a wheel disposed at an outer side from the center of a curve radius must be higher than a rotational speed of a wheel disposed at an inner side depending on differences in the radius of gyration. Accordingly, controlling the speed of each motor to make changes in the speed depending on the circumstances is important in ensuring driving stability.

Additionally, the wheel disposed at an outer side from the center of a radius of gyration has a higher load due to centrifugal force generated by rotation. However, when running in a curved section, a motorcycle realized through the invention of Korean Patent Number 10-0873537 titled a two-wheel moving body and a motorcycle having the same and ordinary motorcycles tilt the bodies thereof toward the center of the radius of gyration so as not to be affected by centrifugal force, thereby ensuring stability. Then, the center of gravity moves close to the radius of gyration, and the wheel disposed close to the center of the radius of gyration has a higher load.

The present invention may ensure easy control and stability without a separate controller by associating centrifugal force naturally exerted on each wheel and differences in loads at each wheel which are caused by the center of weight displaced not to be affected by centrifugal force and to ensure stability with unique features (a higher load leading to a lower speed and a lower load leading to a higher speed) of a motor.

Brushless DC (BLDC) motors are expensive relative to other motors. However, BLDC motors are excellent in that a voltage is proportionate to rotation frequency per minute and that current is proportionate to load (torque) - i.e. speed to torque.

```
(Formula 1)

V (voltage) = A (constant) x rpm (rotation per minute,

rotation speed)

Load (torque) = B (constant) x I (current)
```

Additionally, BLDC motors have no brush, no electrical noise (flame), no mechanical noise and no abrasion, while having great reliability and a long life span. Accordingly, BLDC motors are appropriate for a high-speed rotation.

The above-described features of BLDC motors in combination with physical phenomena are applied to a means of transportation according to the present invention. Above all, power of each motor is made the same and power is supplied to a controller by using one power supply device such that the amount of power supplied to each motor remains the same. Additionally, correlation between speed and loads in the above-described state is used such that the motor may control itself, thereby ensuring easy control and stability.

More precisely, the same amount of power is supplied to motors installed at the wheels of a means of transportation such as a motorcycle etc., which are disposed at an inner side and disposed at an outer side from the center of a radius of gyration, as described above.

Additionally, when the means of transportation runs in a curved section, the displacement of the center of weight leads the wheel disposed in the inner side to have a higher load. Accordingly, the motor installed at the wheel needs more current to secure more power.

```
(Formula 2)

P (electric power, fixed) = I x V

I (current) = P (electric power, fixed) / V (voltage)
```

Then, according to formula 2, more current leads to lower voltages. Additionally, according to formula 1, lower voltages lead to lower speed.

In conclusion, motors with the same power are used and the same amount of power is supplied to a motor controller of each wheel. As a result, distances in speed and loads of each wheel, which are caused at the time of a drive in a curved section, may be controlled without a separate control device by means of unique features of a motor and physical phenomena taking place at the time of a drive in a curved section.

## ADVANTAGEOUS EFFECTS

1. In general, when a motorcycle and a means of transportation with three more wheels realized through the invention of "Korean Patent Number 10-0873537 titled a two-wheel moving body and a motorcycle having the same" are driven by a plurality of motors rather than one motor, speed of each wheel is controlled to be the same at the time when the motorcycle and the means of transportation run in a straight section, and is controlled to be different at the time when the motorcycle and the means of transportation run in a curved section. In doing so, among other methods, a control method according to the present invention may be used to ensure easy control and stability without a separate device by means of unique features of a motor and physical phenomena.

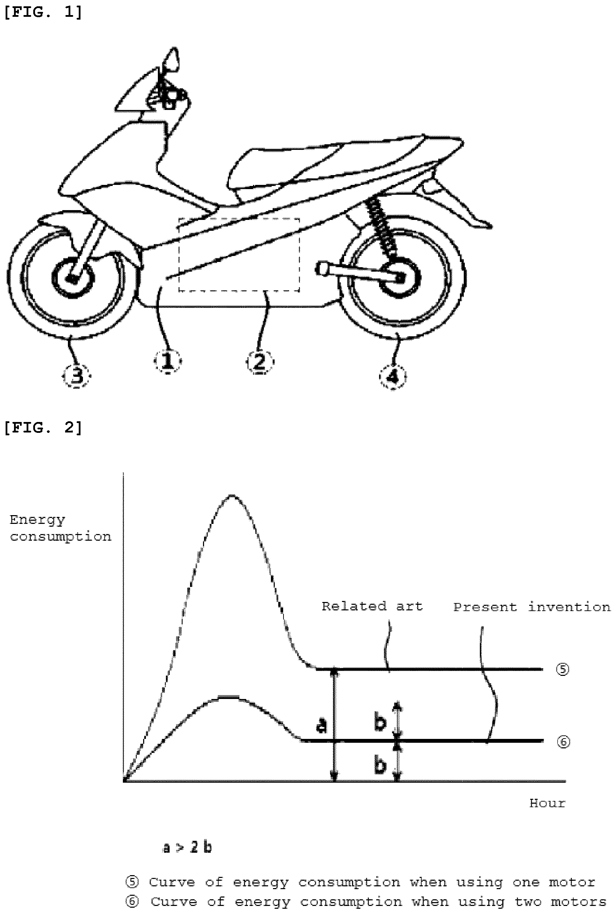

2. In general, energy consumption per hour of electric vehicles shows the same pattern as in FIG. 2. That is, electric vehicles rapidly consume a large amount of energy from the moment they are started to the moment their speed reaches a certain level. However, electric vehicles consume less energy when the speed reaches a certain level and a stable level (steady state).

A means of transportation according to the present invention shows the same pattern of energy consumption. When applying motors at each wheel and using two or more wheels rather than one large motor, the means of transportation shows improvement in energy efficiency. That is, under the same situation, the means of transportation driven by using two or more motors rather than one motor consumes less energy.

## BRIEF DESCRIPTION OF THE DRAWINGS

FIG. 1 is a side view illustrating a structure of an electric motorcycle according to an embodiment of the present invention.

FIG. 2 is a graph illustrating energy consumption of an electric motorcycle according to an embodiment of the present invention.

FIG. 3 is a view illustrating the difference in a radius of gyration and the difference in centrifugal force when an electric motorcycle runs in a curved section.

FIG. 4 is a view illustrating the displacement of the center of gravity on the basis of rotation.

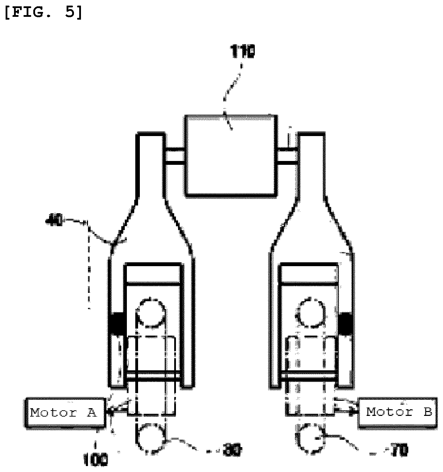

FIG. 5 is a view illustrating an example of a rear wheel of a means of transportation with an independent motor installed inside each wheel.

## MODE FOR CARRYING OUT THE INVENTION

Below, embodiments of the present invention will be described in detail with reference to the accompanying drawings such that those skilled in the art to which the present invention pertains can easily embody the present invention. However, the invention may be embodied in various different forms, and should not be construed as being limited to the embodiment set forth herein.

In order to describe the present invention in detail, in the drawings, those that are not associated with the description of the present invention will be omitted. Like reference numerals denote like elements throughout the specification.

Throughout the specification, when one element comprises another element, it implies the inclusion of another element but not the exclusion of any other element unless otherwise described.

As illustrated in FIG. 1, an electric motorcycle according to this embodiment may be a two-wheel motorcycle or a multi-wheel motorcycle such as a three or more-wheel motorcycle. Additionally, like an ordinary electric motorcycle, the electric motorcycle has a rechargeable battery. The battery will not be described herein because the battery is identical with a batter that is commonly used.

Next, the structure in which the wheels are arranged and connected with the main body, the steering system, the shock absorption system etc. will not be described herein because the structure, the steering system, the shock absorption system etc. are substantially similar to those that are commonly used for a motorcycle.

However, a means of transportation with three or more wheels such as a motorcycle realized through the invention of "Korean Patent Number 10-0873537 titled a two-wheel moving body and a motorcycle having the same" is configured to have two or more wheels out of the entire wheels, which are driven by independent motors. To be sure, the entire wheels may be configured to be driven by independent wheels.

Additionally, each of the independent motor-driven wheels of a motorcycle according to this embodiment is preferably configured to be a wheel with a built-in motor - a wheel into which an electric motor is built.

Wheels with built-in motors used for this embodiment will not be described because the wheels with built-in motors are substantially the same as those that are commonly used.

i) When the above-described means of transportation with two or three or more wheels runs in straight sections, each of the wheels has the same speed, but when the above-described means of transportation with two or three or more wheels runs in curved sections, each of the wheels have different speeds.

The reason is that the distances between each of the wheels and the center of a curve radius, as illustrated in FIG. 3, are different, when a means of transportation runs in a curved section. This means that a rotational speed of a wheel disposed at an outer side from the center of a curve must be higher than a rotational speed of a wheel disposed at an inner side according to a greater radius of curvature (circumference = $2 \pi r$, r = radius of gyration). Accordingly, controlling the speed of the wheel, disposed at the outer side, and the wheel, disposed at the inner side to make changes in the speed depending on the circumstances, is important in ensuring driving stability. To this end, it is necessary to precisely control (synchronize) each motor.

Further, the durability and stability of the control device is an important factor considering that in general, the condition of a means of transportation is heavily dependent on the driver's driving habits and driving environment.

To this end, the present invention uses physical load generated by a means of transportation itself instead of a separate controller and uses a BLDC motor among other motors so as to make use of the unique features of a BLDC motor.

Additionally, when it comes to a means of transportation applied in this embodiment, easy control and stability may be ensured by using correlation between speed and load, in the same state in which power of each motor is made the same and power is supplied to a motor controller by using the same supply line, such that the motor may control itself.

To be precise, as in formula 1, under the assumption that power is supplied to each motor controller through one supply line, in the event that the features of a BLDC motor that a voltage is proportionate to rotation frequency of a motor and that current intensity is proportionate to load are used, load leads to a reduction in speed and accordingly, more power is needed.

From physics perspectives, (formula 3) kinetic energy (E) = $1/2 \times mv^2$, $v^2$ (speed) = $2 \times$ kinetic energy (E) / m (mass, weight) may be obtained. According to formula 3, in the event that the kinetic energy remains constant (fixed value), weight is inversely proportionate to the square of speed.

Additionally, as in FIG. 3, when a means of transportation such as a motorcycle etc. realized through the invention of "Korean Patent Number 10-0873537 titled a two-wheel moving body and a motorcycle having the same" runs in a curved section, the means of transportation must automatically tilt the vehicle body thereof toward the center of the curve radius so as not to be affected by centrifugal force, thereby ensuring stability. Then, as in FIG. 4, the center of gravity of the means of transportation moves towards the center of the radius of gyration, and more weight is exerted to a wheel disposed close to the center of the radius of gyration. That is, the means of transportation has a higher load. If so, the speed of the wheel disposed at an inner side of the radius of gyration is lowered because of a greater weight (load) according to the unique features of BLCD motors.

That is, when the means of transportation runs a curved section, the speed of the wheel disposed at the inner side is naturally lowered without a separate control device because of the unique features of BLDC motors and the physical phenomena. On the contrary, when the means of transportation runs a curved section, the speed of the wheel disposed at the outer side goes up because of a lower load resulting from the displacement of the center of weight caused by centrifugal force.

ii) In general, the energy consumption of a means of transportation driven by a motor is indicated as in FIG.2. That is, a high load is provided to the motor of a means of transportation from the moment that the means of transportation is started to the moment that the speed of the means of transportation reaches a certain level, and the means of transportation rapidly consumes a large amount of energy. However, the means of transportation consumes less energy when the speed of the means of transportation reaches a certain level and a stable level (steady state).

An electric motor cycle according to the present invention shows the same pattern of energy consumption. However, when driven by using wheels equipped with two independent drive motors rather than one motor (FIG. 2), the motorcycle consumes less energy as illustrated in FIG. 2. That is, in the event that the motorcycle is driven by using two or more independent drive wheels (equipped with motors), the total amount of energy consumed by all the motors of each of the wheels is less than the amount of energy consumed by a motor under the same situation (see. formula in FIG. 2).

It should be understood that the embodiments are provided as examples and the present invention should not be limited to the embodiments set forth herein. For instance, each element described as a unified one may be embodied as a separate one and each element described as a separate one may be embodied as a combined one.

The present invention should be considered as limited only by the scope of the appended claims and all the changes and modifications derived from the meaning and scope of the appended claims and equivalents thereof should be construed as being included in the scope of the present invention.

[Description of the Symbols]

Two-wheel motorcycle body
Battery
Front wheel equipped with a motor
Rear wheel equipped with a motor
Curve of energy consumption when using one motor
Curve of energy consumption when using two motors

**Claims**

1. A method of control in relation to differences between speed and in loads of each drive wheel, which are caused when a motorcycle realized through the invention of "Korean Patent Number 10-0873537 titled a two-wheel moving body and a motorcycle having the same" and a means of transportation (motorcycle etc.) with two or more independent drive wheels which are independently driven by electricity at a front wheel and/or a rear wheel run in a curved section,
   if power of each motor applied to a wheel at the same side at a front side and a rear side is made the same and one power supply device is used to supply the same amount of power to each motor controller, speed and loads may be controlled without a separate control device in a stable manner by means of unique features of a motor (a higher load leading to a lower speed, a lower load leading to a higher speed) and physical phenomena (a phenomenon in which a means of transportation must displace the center of gravity not to affected by centrifugal force generated when running in a curved section thereby ensuring stability) affecting each wheel of a means of transportation at the time of a drive in a rotation section.

2. The method according to claim 1,
   brushless DC (BLDC) motors, which have little electrical noises (flames), little mechanical noises and little abrasion and have great durability and stability, are used to maximize effectiveness when the motor is selected to be applied to each wheel of the means of transportation because BLDC motors are excellent in features of speed to loads and do not apply brushes.

3. The method according to claims 1 and 2,
   the independent drive wheel is configured to be a wheel with a built-in motor - a wheel into which a motor is built to improve energy efficiency.

4. A means of transportation driven by electricity such as an electric motorcycle with two or more wheels etc. shows less energy consumption and improvement in energy efficiency when using two or more motors rather than one motor depending on the circumstances.

[FIG. 1]

[FIG. 2]

Energy consumption

Related art    Present invention

⑤

a   b

b

⑥

Hour

a > 2 b

⑤ Curve of energy consumption when using one motor
⑥ Curve of energy consumption when using two motors

7

[FIG. 3]

Centrifugal force $= mrw^2$

Distance ➡ $a=c < b=d$

$Fa=Fc < Fb=Fd$

[FIG. 4]

Movement of the center of
weight from a to b
Load amount A < B

Movement of the center of
weight from b to a
Load amount A > B

[FIG. 5]

## INTERNATIONAL SEARCH REPORT

| | International application No. |
|---|---|
| | **PCT/KR2016/003217** |

**A.    CLASSIFICATION OF SUBJECT MATTER**

*B62K 5/027(2013.01)i, B62K 5/01(2013.01)i, B62M 23/00(2006.01)i, B62K 11/00(2006.01)i, B60L 15/20(2006.01)i*

According to International Patent Classification (IPC) or to both national classification and IPC

**B.    FIELDS SEARCHED**

Minimum documentation searched (classification system followed by classification symbols)

B62K 5/027; B60L 11/18; B62K 5/04; B62K 25/10; B62M 7/12; B60L 11/04; B62K 11/10; B60L 15/20; B62K 5/01; B62M 23/00; B62K 11/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: motorcycle, drive wheel, BLDC motor, curved section, motor controller

**C.    DOCUMENTS CONSIDERED TO BE RELEVANT**

| Category* | Citation of document, with indication, where appropriate, of the relevant passages | Relevant to claim No. |
|---|---|---|
| X | KR 10-2015-0029119 A (DUCKWONENT CO., LTD.) 18 March 2015<br>See abstract, paragraphs [0018]-[0020], [0033] and figure 1. | 4 |
| Y | | 1-3 |
| Y | KR 10-2012-0063118 A (HYUNDAI MOTOR COMPANY) 15 June 2012<br>See abstract, paragraphs [0028]-[0029], [0034]-[0035] and figures 1-2. | 1-3 |
| A | KR 10-1034814 B1 (OH, Bong Seok) 16 May 2011<br>See abstract, paragraphs [0026]-[0035] and figures 2-3. | 1-4 |
| A | KR 10-2008-0015972 A (KOREA UNIVERSITY RESEARCH AND BUSINESS<br>FOUNDATION) 21 February 2008<br>See abstract, paragraphs [0030]-[0036] and figure 1. | 1-4 |
| A | JP 09-207856 A (ISHIHARA, Tadashi) 12 August 1997<br>See abstract, paragraphs [0010]-[0014] and figures 1-2. | 1-4 |

| ☐ | Further documents are listed in the continuation of Box C. | ☒ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 AUGUST 2016 (04.08.2016) | **04 AUGUST 2016 (04.08.2016)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2016/003217**

| Patent document cited in search report | Publication date | Patent family member | Publication date |
|---|---|---|---|
| KR 10-2015-0029119 A | 18/03/2015 | KR 10-1548914 B1 | 11/09/2015 |
| KR 10-2012-0063118 A | 15/06/2012 | NONE | |
| KR 10-1034814 B1 | 16/05/2011 | CN 103282269 A<br>US 2015-0183319 A1<br>WO 2012-093763 A1 | 04/09/2013<br>02/07/2015<br>12/07/2012 |
| KR 10-2008-0015972 A | 21/02/2008 | NONE | |
| JP 09-207856 A | 12/08/1997 | NONE | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100873537